# EUROPÄISCHE PATENTSCHRIFT

(11) **EP 4 347 533 B1**
(45) Veröffentlichungstag und Bekanntmachung des Hinweises auf die Patenterteilung: **19.08.2026**
(21) Anmeldenummer: 22730149.6
(22) Anmeldetag: 18.05.2022
(51) Int. Cl.: C05B 7/00, C05B 17/00, C05F 7/00, C05G 5/12

(54) **VERFAHREN UND VORRICHTUNG ZUR HERSTELLUNG VON DÜNGEMITTELGRANULAT**
METHOD AND DEVICE FOR PRODUCING FERTILISER GRANULES
PROCÉDÉ ET DISPOSITIF POUR LA PRODUCTION DE GRANULÉS D'ENGRAIS

(30) Priorität: 01.06.2021 DE 102021205595
(43) Veröffentlichungstag der Anmeldung: 10.04.2024
(73) Patentinhaber: Glatt Ingenieurtechnik Gessellschaft Mit Beschränkter Haftung, 99427 Weimar (DE)
(72) Erfinder: JACOB, Michael, 99425 Weimar (DE); BUCHHEIM, Johannes, 07749 Jena (DE)
(74) Vertreter: Patentanwälte Magenbauer & Kollegen Partnerschaft mbB
(86) Internationale Anmeldenummer: PCT/EP2022/063467
(87) Internationale Veröffentlichungsnummer: WO 2022/253575

(56) Entgegenhaltungen:
- EP-A1- 3 037 396
- EP-A1- 3 772 507
- WO-A1-2013/191639
- WO-A1-2017/197508
- WO-A1-2019/149405
- CH-A5- 697 083
- DE-A1- 102016 116 633

## Beschreibung

Die Erfindung betrifft ein Verfahren und eine Vorrichtung zur Herstellung von Düngemittelgranulat aus einem aufbereiteten als Verbrennungsrückstand ausgebildeten Ausgangsstoff.

Die landwirtschaftliche Nutzung der Böden entzieht diesen mineralische Rohstoffe wie beispielsweise phosphorhaltige Verbindungen. Diese sind den Böden für eine weitere landwirtschaftliche Nutzung durch künstliche, mineralische Düngemittel erneut zuzuführen, wobei die mineralischen Rohstoffe vorteilhafterweise und unter Nachhaltigkeitsgesichtspunkten aus bisher nur bedingt genutzten Rohstoffquelle bezogen.

Den hergestellten Düngemittelgranulaten ist allen gemein, dass sie den Anforderungen an die Düngemittelverordnung (DüMV) genügen müssen, insbesondere auch hinsichtlich einer Schadstoffbelastung, insbesondere einer Schwermetallbelastung.

Entsprechende Verfahren und Vorrichtungen zur Herstellung von Düngemitteln sind seit langem Stand der Technik und werden nachfolgend kurz zusammengefasst:
Die europäische Patentanmeldung EP 3 037 396 A1 offenbart ein Verfahren zur Herstellung eines phosphathaltigen Düngemittels aus einer Asche oder einem Verkohlungsrückstand eines Schlamms aus einer Abwasserreinigung oder Abfallvergärung durch a) Vermischen der Asche oder des Verkohlungsrückstands mit einer mineralischen Säure und Inkubation der resultierenden Suspension in einem ersten Gefäß, b) Absondern von feuchten Feststoffen aus der Suspension und Ersetzen der abgesonderten Feststoffe durch weitere Asche oder weiteren Verkohlungsrückstand, Vermischen der weiteren Asche oder des weiteren Verkohlungsrückstands mit der in dem ersten Gefäß verbleibenden mineralischen Säure und Inkubation der resultierenden Suspension in dem ersten Gefäß, c) Überführen dieser Feststoffe in ein zweites Gefäß und Vermischen der Feststoffe mit einer pH-neutralen, basischen oder gepufferten wässrigen Flüssigkeit, d) Absondern eines Teils der durch das Vermischen entstandenen Flüssigkeit aus dem zweiten Gefäß, Abtrennen darin enthaltener Schwermetallionen und Rückführen dieser Flüssigkeit in das zweite Gefäß, e) Absondern von feuchten Feststoffen aus der im zweiten Gefäß enthaltenen Flüssigkeit und f) Wiederholen der Schritte b) bis f). Im Anschluss daran wird die entstandene Mischung in der Konditioniereinheit pilliert.

Die deutsche Patentanmeldung DE 10 2016 116 633 A1 beschreibt ein Verfahren zur Herstellung von Düngemittelgranulat, wobei eine Suspension mindestens aus einem phosphathaltigen Sekundärrohstoff und mindestens einer Mineralsäure erzeugt wird, in der erzeugten Suspension die schwerlöslichen Phosphate des mindestens einen phosphathaltigen Sekundärrohstoffes zumindest teilweise gelöst und/oder in eine wasser- und/oder neutral-ammoniumcitratlösliche Phosphatphase umgewandelt werden und diese Suspension anschließend einer Granulation zugeführt wird, wobei sich das Düngemittelgranulat bildet und wobei der enthaltene P2O5-Gehalt im Düngemittelgranulat größer 75 % neutral-ammoniumcitratlöslich ist und außerdem von einem Düngemittelgranulat mit einem sphärischen Formfaktor von größer gleich 0,85, mit einer Granulatgrößenverteilung im Bereich von 1 mm (d05) bis 10mm (d95) und einem P2O5-Anteil größer 8 %, wobei der P2O5-Gehalt größer 75 % neutral-ammoniumcitratlöslich ist.

In der internationalen Patentanmeldung WO 2019/149405 A1 wird ein Verfahren zur Herstellung eines pedosphärenverbessernden Granulats sowie die dazugehörige Vorrichtung und ein über das Verfahren gewonnenes Granulat gezeigt. Hierbei verfügt das Verfahren über die Verfahrensschritte a) der Erzeugung einer Rohstoffdispersion umfassend mindestens ein anorganisches Sekundärphosphat und mindestens ein Reaktionsmittel, wobei der Anteil an einer flüssigen Phase in der Rohstoffdispersion größer 30 % ist, bei einer Inkubationszeit zwischen anorganischem Sekundärphosphat und Reaktionsmittel zwischen 1 bis 100 Minuten, b) der Abtrennung eines Teils der flüssigen Phase der Rohstoffdispersion, c) der Granulierung und/oder Extrusion der verbleibenden Rohstoffdispersion mit reduzierter flüssiger Phase, d) entweder der Rückführung der im Prozessschritt b) abgetrennten flüssigen Phase ohne zumindest teilweise Schwermetallabtrennung in den Prozessschritt a) zur Herstellung einer Rohstoffdispersion oder zumindest teilweises Absondern von Schwermetallen aus der im Prozessschritt b) abgetrennten flüssigen Phase sowie Ausschleusung dieser Schwermetalle aus dem Prozess mit anschließender Rückführung der schwermetallarmen abgetrennten flüssige Phase zur Herstellung einer Rohstoffdispersion analog Prozessschritt a) und/oder in den Prozessschritt c) und e) Wiederholen der Prozessschritte a) bis d).

Nachteilig an den im Stand der Technik beschriebenen Verfahren ist, dass durch die Reaktion zwischen den als Verbrennungsrückständen ausgebildeten Ausgangsstoffen und dem Reaktionsmittel neben den als Schwermetallen ausgebildeten Schadstoffen auch ein wesentlicher Teil an Phosphaten aus den Ausgangsstoffen herausgelöst wird und somit nur noch bedingt zur Herstellung des Düngemittelgranulats nutzbar ist.

Die europäische Patentanmeldung EP 3 772 507 A1 betrifft eine Vorrichtung zur Herstellung von Düngemittelgranulat umfassend eine über einen Rohstoffzulauf, einen Säurezulauf und einen Reaktorablauf verfügende, einen Reaktor aufweisende Reaktoreinheit zur Erzeugung einer Suspension aus dem phosphathaltigen Rohstoff und einer Säure sowie einen Granulator zur Granulation der erzeugten Suspension, wobei die Reaktoreinheit über eine Reaktorrezirkulationseinrichtung für die Suspension verfügt.

Die schweizerische Patentschrift CH 697 083 A5 offenbart ein Verfahren und eine Anlage zur Ruckgewinnung von Phosphor aus phosphorhaltigen Verbrennungsaschen.

Die internationale Patentanmeldung WO 2013/191639 A1 bezieht sich allgemein auf die Herstellung von Ammoniumphosphaten aus phosphorhaltigen Lösungen und insbesondere die Herstellung von Ammoniumphosphaten aus einer Flüssigkeit, die Phosphorsäure enthält.

Die internationale Patentanmeldung WO 2017/197508 A1 betrifft ein Verfahren zur Behandlung von Gärresten, das die folgenden Schritte aufweist: Dosieren der Gärreste mit Metallkationen in einer Menge, die ausreicht, um einen Niederschlag zu erzeugen, der die Metallkationen in den Gärresten enthält; Entwässern der Gärreste, um einen Kuchen zu bilden, sodass zumindest ein Teil des Niederschlags im Kuchen zurückgehalten wird; und Pyrolysieren des Kuchens, um Biokohle zu erzeugen.

Aufgabe der Erfindung ist es daher ein alternatives Verfahren und eine alternative Vorrichtung zur Herstellung von Düngemittelgranulaten bereitzustellen, wobei ein wesentlich größerer Teil der Phosphate zur Herstellung des Düngemittelgranulates nutzbar gemacht wird.

Diese Aufgabe wird bei einem Verfahren der eingangs genannten Art dadurch gelöst, dass in einer Aufbereitungsphase eine erste Suspension aus dem Ausgangsstoff und einem Lösungsmittel hergestellt wird, wodurch in der ersten Suspension im Ausgangsstoff gebundene Schadstoffe durch das Lösungsmittel zumindest teilweise aus dem Ausgangsstoff herausgelöst werden, um dann zur Gewinnung eines Raffinats das Extrakt zumindest teilweise von der ersten Suspension abzutrennen, um in einer sich an die Aufbereitungsphase anschließenden Herstellungsphase ein auf dem Raffinat basierendes Zwischenprodukt unter Luftabschluss und ohne Sauerstoffzufuhr bei einem Arbeitsdruck zu erhitzen, sodass unter Erzeugung des Düngemittelgranulates eine Pyrolyse des Zwischenprodukts stattfindet. Hierbei werden als Pyrolyse verschiedene thermo-chemische Umwandlungsprozesse bezeichnet, in denen Verbindungen bei hohen Temperaturen und in Abwesenheit von Sauerstoff gespalten werden. Vorteilhafterweise wird in der Aufbereitungsphase beim Extrahieren der insbesondere als Schwermetall ausgebildeten Schadstoffe durch das Lösungsmittel aus dem als Verbrennungsrückstand ausgebildeten Ausgangsstoff zumindest das im Ausgangsstoff schwerlöslich gebundene Phosphat nicht gelöst und verbleibt in diesem. Die im Raffinat verbleibenden Phosphate können somit in der sich an die Aufbereitungsphase anschließenden Herstellungsphase in wesentlich größerem Umfang in das Düngemittelgranulat eingebracht werden. Durch die große Oberfläche des erzeugten Düngemittelgranulats in Form von Kohle werden Wasser sowie Nährstoffe schnell gebunden. Das verhindert Fäulnisprozesse und ist somit förderlich für das Tierwohl. Durch Zugabe von Düngemittelgranulat in Form von Kohle werden wertvolle Nährstoffe sofort in der Kohle gebunden und können daher nicht mehr ausgewaschen werden.

Während der Pyrolyse wird das Zwischenprodukt auf eine Temperatur von 150 °C bis 1.500 °C erhitzt, insbesondere auf eine Temperatur zwischen 400 °C und 1.200 °C. Durch die hohen Temperaturen werden die Bindungen innerhalb der Moleküle gespalten und durch den Sauerstoffausschluss wird eine Verbrennung verhindert, mit dem Ziel einer Herstellung von festen sekundären Energieträgern.

Weiter vorteilhaft ist der Arbeitsdruck als atmosphärischer Luftdruck plus minus 100 mbar ausgebildet. Der atmosphärische Luftdruck entsteht durch das Gewicht der Lufthülle, die die Erde bis zu einer Höhe von ca. 500 km umgibt. Darüber hinaus unterliegt der atmosphärische Luftdruck wetterbedingten Schwankungen. In Meereshöhe beträgt der atmosphärische Luftdruck im Mittel 1013,25 mbar. Durch eine Variation im Arbeitsdruck besteht die Möglichkeit die Parameter der Pyrolyse zu beeinflussen und somit die Pyrolyse ggf. bei niedrigeren Temperaturen durchzuführen.

Nach einer diesbezüglich vorteilhaften Ausgestaltung des Verfahrens wird in einem Regenerationsschritt das in der Aufbereitungsphase zumindest teilweise von der ersten Suspension abgetrennte Extrakt regeneriert und zur Herstellung der ersten Suspension rezirkuliert. Hierdurch wird der Lösungsmittelverbrauch deutlich gesenkt, wodurch das Verfahren zur Herstellung von Düngemittelgranulaten effizienter und kostensparender wird. Bevorzugt erfolgt die Regeneration des Extrakts mittels Ionenselektion und/oder Fällung und/oder Extraktion und/oder einem Schritt umfassend eine Verdampfung/Destillation und/oder elektrochemischer Aufreinigung. Besonders bevorzugt erfolgt die Fällung als Sulfidfällung unter Verwendung von Thiosulfat-Salzen. Die Sulfidfällung durch Verwendung von Thiosulfat-Salzen weist den Vorteil auf, dass das Entstehen von nur durch einen sehr großen Apparateaufwand wieder abreinigbaren Schwefelgasen verhindert wird. Weiter bevorzugt erfolgt die Abscheidung der Schadstoffe, insbesondere der Schwermetalle, durch elektrochemische Aufreinigung, bspw. mittels eines Platin-Grafit-Elektrodenpaars.

Zweckmäßigerweise wird die Aufbereitungsphase mit einem als Raffinat ausbildeten Ausgangsstoff einmal oder mehrmals wiederholt. Durch eine solche Aufbereitungskaskade erfolgt eine vollständigere Extraktion der Schadstoffe, insbesondere der Schwermetalle, aus dem Ausgangsstoff, sodass die die Schadstoffkonzentration im Raffinat mit jeder Aufbereitungsphase sinkt. Bevorzugt werden in unterschiedlichen Aufbereitungsphasen unterschiedliche Lösungsmittel eingesetzt. Durch die unterschiedlichen Lösungsmittel ist es möglich die verschiedenen im Ausgangsstoff gebundenen Schadstoffe unterschiedlich gut zu extrahieren, da die gebundenen Schadstoffe ihren Eigenschaften entsprechend durch unterschiedliche Lösungsmittel unterschiedlich gut aus dem Ausgangsstoff herausgelöst und im Lösungsmittel adsorbiert werden.

Entsprechend einer zusätzlichen vorteilhaften Ausgestaltung des Verfahrens werden der ersten Suspension und/oder dem Raffinat und/oder dem Zwischenprodukt Additive zugeführt. Als Additive gelten insbesondere Phosphor, Schwefel und Stickstoff. Die Zugabe der Additive erfolgt in der für das herzustellende Düngemittelgranulat erforderlichen Menge und in beliebiger Kombination der Additive während des Verfahrens, zweckmäßigerweise jedoch während der Herstellung der ersten Suspension und/oder während der Herstellung der zweiten Suspension. Bevorzugt erfolgt die Zugabe der Additive jedoch während der Herstellung der zweiten Suspension als Zwischenprodukt.

Zur Anreicherung mit Phosphor können der ersten und/oder der zweiten Suspension Phosphorquellen wie beispielsweise Apatit, Hydroxylapatit, Monocalciumphosphat (MCP), Diammoniumphosphat (DAP), Dicalciumphosphat (DCP), Tricalciumphospaht (TCP) oder Monoammoniumphoshat (MAP) oder Kaliumdihydrogenphosphat in beliebiger Menge oder Kombination zugeführt werden. Auch durch einen Aufschluss des auch als Suspensionsrückstand bezeichneten Raffinats in der zweiten Suspension mit Phosphorsäure kann eine Anreicherung mit Phosphor erzielt werden.

Eine Anreicherung mit Schwefel kann zweckmäßigerweise durch den Aufschluss des Raffinats mit Schwefelsäure in der zweiten Suspension erfolgen, d. h. in der Herstellungsphase. Darüber hinaus wird auch durch die Zugabe von bspw. Alkali- oder Erdalkalisulfaten zu der ersten und/oder zweiten Suspension eine Anreichung mit elementarem Schwefel und/oder einer Ammoniumsulfatlösung erreicht.

Eine Anreicherung des Düngemittelgranulates mit Stickstoff wird dadurch erreicht, dass das Raffinat in der Herstellungsphase mit Salpetersäure versetzt wird, bevorzugt bei der Herstellung der zweiten Suspension. Außerdem kann der ersten und/oder zweiten Suspension zur Anreicherung mit Stickstoff Harnstoff und/oder Ammoniumsulfat zugegeben werden. Der Vorteil von Ammoniumsulfat liegt darin, dass der Stickstoff als NH₄⁺ vorliegt, was zu einer besseren Pflanzenverfügbarkeit und/oder Versorgung der Pflanzen führt. Auch der im Ammoniumsulfat vorliegende Schwefel wird als Sulfat verbessert durch die Pflanzen aufgenommen.

Für die Herstellung eines NPK-Düngemittelgranulats ist die Zugabe von unterschiedlichen der vorgenannten Additive notwendig, zweckmäßigerweise insbesondere von Salpetersäure, Harnstoff, DCP und/oder Kaliumsalzen, wie Kaliumnitrat, Kaliumchlorid oder Kaliumdihydrogenphosphat.

In der Herstellungsphase vor der Pyrolyse wird in einer bevorzugten Weiterbildung des Verfahrens eine zweite Suspension aus Raffinat und Reaktionsmittel als Zwischenprodukt hergestellt. Durch die Laugung des Raffinats werden die schwerlöslichen Phosphate, die nach der Extraktion noch im Raffinat enthalten sind, aus diesem herausgelöst und in besser pflanzenverwertbare Phosphate umgewandelt.

Das Reaktionsmittel ist vorteilhafterweise eine Säure oder eine Lauge ist, wobei zweckmäßigerweise die Säure eine mineralische und/oder organische Säure oder eine beliebige Mischung aus diesen ist. Als Mineralsäuren werden die drei starken, anorganischen Säuren Salzsäure, Schwefelsäure und Salpetersäure, aber auch die Phosphorsäure und die Kohlensäure bezeichnet. Organische Säuren sind organische chemische Verbindungen, die über mindestens eine funktionelle Gruppe verfügen, die mit Wasser oder anderen protonierbaren Lösungsmitteln eine Gleichgewichtsreaktion eingeht, insbesondere beispielsweise Carbonsäuren. Diesbezüglich ist die organische Säure eine kurzkettige Carbonsäure mit einer Anzahl von bis zu sechs Kohlenstoffatomen, beispielsweise Ameisensäure, Essigsäure, Zitronensäure, Glykolsäure, Diglykolsäure sowie Mischungen daraus. Darüber hinaus weist die organische Säure bevorzugt ein Kohlenstoff-Sauerstoff-Verhältnis von 1:1 oder 1:2 auf.

Gemäß einer zusätzlichen vorteilhaften Weiterbildung wird der Ausgangsstoff vor und/oder die erste Suspension während der Aufbereitungsphase in einem Mahlschritt gemahlen. Weiter bevorzugt wird das auf dem Raffinat basierende Zwischenprodukt vor und/oder während der Herstellungsphase in einem Mahlschritt gemahlen. Durch den vor der Granulation erfolgenden Mahlvorgang wird die Prozessstabilität gesteigert, indem durch den Mahlvorgang die Ausgangsstoffe und/oder die erste Suspension und/oder das Raffinat und/oder die zweite Suspension zerkleinert werden. Hierdurch wird die Reaktionsteilnahme der Ausgangsstoffe und/oder der ersten Suspension und/oder des Zwischenprodukts auch durch die Vergrößerung der Oberfläche der Ausgangsstoffe der ersten Suspension und/oder des Zwischenprodukts erhöht, d. h. die Reaktionskinetik wird erhöht, was die Reaktion zwischen den entsprechenden Reaktionspartnern beschleunigt, was wiederum zu einer gleichmäßigeren Umsetzung der Ausgangsstoffe der ersten Suspension und/oder des Zwischenprodukts und somit auch zu einer Zeitersparnis führt. Gleichzeitig wird zudem die Verstopfungsgefahr an Engstellen in der Vorrichtung, insbesondere in Düsen der Granulationseinrichtungen, an Klappen und Schiebern oder dergleichen, reduziert. Zudem wird eine auftretende Sedimentation durch den Mahlvorgang minimiert.

Weiter vorteilhaft ist, dass der Ausgangsstoff auch in einer Mahleinheit während der Aufbereitungsphase zerkleinerbar ist oder zerkleinert werden kann, bspw. in einer eine Mahleinheit aufweisenden Rezirkulationseinrichtung für die erste Suspension. Auch das Raffinat kann während der Herstellung der zweiten Suspension gemahlen werden, zweckmäßigerweise in einer eine Mahleinheit aufweisenden Rezirkulationseinrichtung für die zweite Suspension.

Überdies vorteilhaft ist es, wenn das Reaktionsmittel zum Beginn der Reaktion, d. h., wenn die Reaktionspartner zur zweiten Suspension vermischt werden, eine Temperatur von 10 °C bis 40 °C aufweist. Zweckmäßigerweise zersetzen sich bei diesen Temperaturen die organischen Säuren nicht. Darüber hinaus bilden sich bei Temperaturen des Reaktionsmittels von 10 °C bis 40 °C bei der Reaktion mit dem Raffinat weniger schwerlösliche Hochtemperaturphasen des Phosphats aus.

Ferner wird vorteilhafterweise das Reaktionsmittel vorgelegt und diesem das auf dem Raffinat basierende Zwischenprodukt zugegeben.

Nach einer bevorzugten Ausgestaltung des Verfahrens weist die erste Suspension eine Extraktionszeit von insbesondere bis zu 90 min und/oder die zweite Suspension eine Reaktionszeit von bis zu 90 min aufweist, bevorzugt zwischen 20 min und 60 min, auf. Mit Extraktionszeit wird der Zeitraum bezeichnet, in dem das Lösungsmittel mit dem Ausgangsstoff in Kontakt steht, um die insbesondere als Schwermetalle ausgebildeten Schadstoffe aus dem Ausgangsstoff in das Lösungsmittel herauszulösen. Die erste Suspension weist bevorzugt eine Extraktionszeit von insbesondere bis zu 90 min auf. Allerdings können auch deutlich längere Extraktionszeiten von Tagen und Wochen notwendig sein. In entsprechenden Fällen wird die erste Suspension dann in als Pufferspeichern ausgebildeten Behältern zwischengelagert. Mit Reaktionszeit wird der Zeitraum bezeichnet, in der das Raffinat mit dem Reaktionsmittel in Kontakt steht, um einen Aufschluss des auch als Suspensionsrückstand bezeichneten Raffinats zu erreichen und insbesondere die schwerlöslichen Phosphate in besser pflanzenverwertbare Phosphate umzuwandeln. Überraschenderweise hat sich herausgestellt, dass die vorgenannten Extraktions- und Reaktionszeiten, bevorzugt in einer beliebigen Kombination, dazu beiträgt, besser pflanzenverwertbare Düngemittelgranulate herzustellen.

Entsprechend einer Fortbildung herrscht während der Reaktionszeit eine Temperatur der zweiten Suspension zwischen 20 °C und 80 °C vor. Es wurde herausgefunden, dass diese Temperaturen für die Herstellung der zweiten Suspension und die dabei ablaufende Reaktion zwischen Raffinat und Reaktionsmittel besonders vorteilhaft sind, um die schwerlöslichen Phosphate aus dem Raffinat zu extrahieren.

Zweckmäßigerweise wird der ersten Suspension und/oder dem Zwischenprodukt mechanische Energie zum Aufbruch von Agglomeraten zugeführt wird, insbesondere mittels Ultraschall. Die Zufuhr der mechanischen Energie dient einer besseren Homogenisierung der ersten und/oder dem Zwischenprodukt, insbesondere dem Aufbrechen von Agglomeraten, und somit zur Unterstützung des Aufschlusses des Raffinats in der Herstellungsphase und dadurch auch zur Reduktion der Reaktionszeit. Zweckmäßigerweise werden zum Einbringen von mechanischer Energie Hochdruckhomogenisierungsapparate, Plattenschwinger oder Sonotroden oder dergleichen eingesetzt. Die Homogenisierung führt zu einer Senkung der Viskosität und damit einer Erhöhung der Fließfähigkeit.

In einer bevorzugten Ausgestaltung weist die zweite Suspension einen Feststoffanteil von 30 % bis 70 % auf, insbesondere von 40 % bis 65 %. Überraschenderweise hat sich herausgestellt, dass ein Feststoffanteil von 30 % bis 70 % in der zweiten Suspension für die sich an die Herstellung der zweiten Suspension anschließende Granulation optimal ist, insbesondere im Hinblick auf eine Sprühgranulation oder eine Sprühagglomeration, und dadurch bedingt sehr gleichmäßige Düngemittelgranulate mit einer engen Korngrößenverteilung erzeugbar sind.

Die Granulation der zweiten Suspension wird bevorzugt mittels Sprühgranulation oder Sprühagglomeration durchgeführt. Diese erfolgt zweckmäßigerweise insbesondere in einem als Hochtemperatur-Wirbelschicht- oder Hochtemperatur-Strahlschichtapparat ausgebildeten Fluidisierungsapparat. Vorteilhafterweise werden hierdurch die Düngemittelgranulate hergestellt, deren Eigenschaften, wie Korngröße, Feuchtegehalt usw., gezielt einstellbar sind oder eingestellt werden. In einer diesbezüglich vorteilhaften Ausführung des Verfahrens wird das als zweite Suspension ausgebildete Zwischenprodukt mittels Sprühgranulation oder Sprühagglomeration granuliert.

Vorteilhafterweise ist das Verfahren zur Herstellung von Düngemittelgranulat ein kontinuierliches Verfahren. Die Vorteile von kontinuierlichen Verfahren sind u. a. eine gleichbleibende Produktqualität, eine über Laufzeit bestimmbar Produktionsmenge an Düngemittelgranulat, ein weniger an manueller Handhabung der Düngemittelgranulate, verbesserte Arbeitssicherheit, weniger Personalbedarf, geringerer Reinigungsaufwand der Vorrichtung und geringere Produktionskosten der Düngemittelgranulate. Allerdings sind auch ein diskontinuierliches oder ein halbkontinuierliches Verfahren denkbar.

Darüber hinaus wird die Aufgabe bei einer Vorrichtung der eingangs genannten Art dadurch gelöst, dass die Vorrichtung eine Aufbereitungseinheit mit einer Extraktionsstufe aufweist, die über einen Behälter zur Herstellung einer ersten Suspension aus dem Ausgangsstoff und einem Lösungsmittel verfügt, und mit einer Trenneinrichtung zur zumindest teilweisen Abtrennung des Extrakts aus der ersten Suspension zur Gewinnung eines Raffinats und, dass die Vorrichtung ferner über eine Herstellungseinheit verfügt, die eine Laugungseinrichtung aufweist, wobei die Laugungseinrichtung über einen Behälter zur Herstellung einer zweiten Suspension aus dem Raffinat und dem Reaktionsmittel verfügt, und die eine Pyrolyseeinrichtung zur Erzeugung des Düngemittelgranulates aus einem auf dem Raffinat basierenden Zwischenprodukt aufweist, wobei die Pyrolyseeinrichtung zur Durchführung einer Pyrolyse unter Luftabschluss und ohne Sauerstoffzufuhr ausgebildet ist. Die Vorrichtung ist vorteilhafterweise geeignet das vorab beschriebene, bevorzugte Verfahren zur Herstellung von Düngemittelgranulaten diskontinuierlich, halbkontinuierlich oder kontinuierlich durchzuführen und so jeweils entsprechende Düngemittelgranulate herzustellen, die eine sehr geringe Schadstoffbelastung, bevorzugt in Form von Schwermetallen, aufweisen. Überraschenderweise verbleiben durch die in der Aufbereitungseinheit durchgeführte Aufbereitungsphase die Phosphate verbessert im Raffinat und können in der sich an die Aufbereitungsphase anschließende Herstellungsphase komplett in das Düngemittelgranulat umgesetzt werden. Hierbei werden als Pyrolyse verschiedene thermo-chemische Umwandlungsprozesse bezeichnet, in denen Verbindungen bei hohen Temperaturen und in Abwesenheit von Sauerstoff gespalten werden. Durch die große Oberfläche des erzeugten Düngemittelgranulats in Form von Kohle werden Wasser sowie Nährstoffe schnell gebunden. Das verhindert Fäulnisprozesse und ist somit förderlich für das Tierwohl. Durch Zugabe von Düngemittelgranulat in Form von Kohle werden wertvolle Nährstoffe sofort in der Kohle gebunden und können daher nicht mehr ausgewaschen werden.

Eventuell im Raffinat enthaltene Schadstoffe, wie Dioxine, werden durch die Pyrolyse ebenfalls zu Kohle umgesetzt. Die Kohle übernimmt die Aufgabe eines Bodenverbesserungssubstrats durch Bindung von Nährstoffen und im Besonderen dient sie zur CO₂-Fixierung. Überdies wird die Bildung von Humus angeregt usw..

Durch die Laugung des Raffinats werden die schwerlöslichen Phosphate, die nach der Extraktion noch im Raffinat enthalten sind, aus diesem herausgelöst und in besser pflanzenverwertbare Phosphate umgewandelt.

Diesbezüglich sind der Behälter zur Herstellung der ersten Suspension und der Behälter zur Herstellung der zweiten Suspension als separate Behälter ausgebildet. Zweckmäßigerweise ist diese Vorrichtung sehr gut zur Durchführung des kontinuierlichen Verfahrens zur Herstellung von Düngemittelgranulat geeignet.

Alternativ sind diesbezüglich der Behälter zur Herstellung der ersten Suspension und der Behälter zur Herstellung der zweiten Suspension als ein Behälter ausgebildet. Eine derartige Ausgestaltung der Vorrichtung zur Herstellung von Düngemittelgranulat bewirkt die Einsparung an Investitionskosten sowie einen geringeren Platzbedarf.

Entsprechend einer zusätzlichen vorteilhaften Ausgestaltung der Vorrichtung ist die Pyrolyseeinrichtung als Granulationseinrichtung in Form eines Fluidisierungsapparates ausgebildet, insbesondere als Hochtemperatur-Wirbelschichtapparat oder Hochtemperatur-Strahlschichtapparat. Vorteilhafterweise werden hierdurch die Düngemittelgranulate hergestellt, deren Eigenschaften, wie Korngröße, Feuchtegehalt usw., gezielt einstellbar. Hierbei wird die zweite Suspension insbesondere kontinuierlich granuliert. Durch die hohen Temperaturen in der Pyrolyseeinrichtung werden die Bindungen innerhalb der Moleküle gespalten und durch den Sauerstoffausschluss wird eine Verbrennung verhindert, mit dem Ziel einer Herstellung von festen sekundären Energieträgern.

Zweckmäßigerweise weist die Aufbereitungseinheit mehrere Behälter zur Herstellung einer Suspension und eine oder mehrere Trenneinrichtungen zur zumindest teilweisen Abtrennung des Extrakts aus der entsprechenden Suspension aufweist, wobei den mehreren Behältern die eine Trenneinrichtung oder jedem Behälter eine separate Trenneinrichtung zugeordnet ist. Vorteilhafterweise werden durch die Trenneinrichtung Extrakt und Raffinat voneinander getrennt, wobei das Extrakt zumindest teilweise abgetrennt wird, sodass das Raffinat mit höherer Qualität, nämlich mit niedrigerer Schadstoffbelastung, weiterverarbeitet werden kann.

Nach einer weiteren bevorzugten Fortbildung der Vorrichtung verfügt die Aufbereitungseinheit über eine oder mehrere Regenerationseinrichtungen für das Extrakt. Dies ist vorteilhaft, da so das Extrakt regenerierbar und damit wiederverwendbar wird. Diesbezüglich weist die Aufbereitungseinheit eine oder mehrere Rezirkulationseinrichtungen für das regenerierte Lösungsmittel auf. Hierdurch wird der Lösungsmittelverbrauch gesenkt und das Verfahren deutlich effizienter und kostensparender. Bevorzugt erfolgt die Regeneration des Extrakts mittels Ionenselektion oder Fällung oder Extraktion oder einem Schritt umfassend eine Verdampfung/Destillation oder einer elektrochemischen Aufbereitung, bspw. mittels eines Platin-Grafit-Elektrodenpaars. Besonders bevorzugt erfolgt die Fällung als Sulfidfällung durch Verwendung von Thiosulfat-Salzen. Die Sulfidfällung durch Verwendung von Thiosulfat-Salzen weist den Vorteil auf, dass das Entstehen von nur durch einen sehr großen Apparateaufwand wieder abreinigbaren Schwefelgasen verhindert wird.

Überdies verfügt die Herstellungseinheit in einer entsprechenden Weiterbildung über eine pH-Wert-Regeleinrichtung. Bevorzugt ist diese in der Herstellungseinheit stromauf des Granulators angeordnet. Durch eine pH-Wert Regelung mittels pH-Wert-Regeleinrichtung besteht die Möglichkeit den pH-Wert der sich aus Raffinat und Reaktionsmittel bildenden zweiten Suspension präzise einzustellen und bspw. nach der Reaktion aber vor der Granulation zu prüfen. Die Einstellung des pH-Werts der zweiten Suspension wirkt sich auf die Klebrigkeit der zweiten Suspension aus, die wiederum für das Verdüsen der zweiten Suspension mittels des bevorzugten als Fluidisierungsapparat ausgebildeten Granulators von sehr großer Bedeutung ist. Je saurer die Suspension, desto klebriger ist diese. Bevorzugt erfolgt die pH-Wert Messung in der zweiten Suspension und die Einstellung des pH-Wertes über die pH-Wert-Regeleinrichtung. Die pH-Wert Regelung kann auch als zusätzlicher, externer Regelkreis ausgebildet sein.

Gemäß einer zusätzlichen bevorzugten Ausgestaltung der Vorrichtung ist die Laugungseinrichtung, insbesondere der Behälter zur Herstellung der zweiten Suspension, als Rohrreaktor ausgebildet. Die Ausbildung als Rohrreaktor weist die Vorteile auf, dass diese Bauform einfach und kostengünstig realisierbar ist. Darüber hinaus weist der Rohrreaktor den Vorteil auf, dass gegenüber einem Rührkesselreaktor ein höherer Umsatz und eine höhere Selektivität erzielbar ist. Der Rohrreaktor verbindet somit die Vorteile des Batch-Reaktors (diskontinuierlicher Rührkesselreaktors) und des kontinuierlichen Rührkesselreaktors.

Nachfolgend wird die Erfindung anhand der beiliegenden Zeichnung näher erläutert und in dieser zeigen
- Figur 1: eine erste Ausführungsform der Vorrichtung zur Herstellung von Düngemittelgranulat,
- Figur 2: eine zweite Ausführungsform der Vorrichtung zur Herstellung von Düngemittelgranulat,
- Figur 3: eine dritte Ausführungsform der Vorrichtung zur Herstellung von Düngemittelgranulat,
- Figur 4: eine vierte Ausführungsform der Vorrichtung zur Herstellung von Düngemittelgranulat,
- Figur 5: eine fünfte Ausführungsform der Vorrichtung zur Herstellung von Düngemittelgranulat und
- Figur 6: eine sechste Ausführungsform der Vorrichtung zur Herstellung von Düngemittelgranulat.

Sofern keine anderslautenden Angaben gemacht werden, bezieht sich die nachfolgende Beschreibung auf sämtliche in der Zeichnung illustrierten Ausführungsformen einer bevorzugten Vorrichtung 1 und dem entsprechenden Verfahren zur Herstellung von Düngemittelgranulat 2. Das Verfahren zur Herstellung von Düngemittelgranulat 2 ein ist hierbei bevorzugt als kontinuierliches Verfahren ausgebildet.

Die Vorrichtung 1 weist eine Aufbereitungseinheit 3 und eine Herstellungseinheit 4 auf. Nachfolgend wird zuerst die Aufbereitungseinheit 3 näher beschrieben:
Die Aufbereitungseinheit 3 verfügt über eine einen Behälter 5 zur Herstellung einer ersten Suspension 6 aus einem als Verbrennungsrückstand ausgebildeten, Schadstoffe 7 enthaltenden Ausgangsstoff 8 und einem Lösungsmittel 9 sowie eine Trenneinrichtung 10 aufweisende Extraktionsstufe 11.

Als Schadstoffe 7 enthaltender Ausgangsstoff 8 werden Verbrennungsrückstände bezeichnet, insbesondere aus der Mono- oder Mitverbrennung von Klärschlamm und/oder Tierausscheidungen und/oder Tiermehl und/oder Tierresten und/oder Tierkörpern und/oder Gülle und/oder Gärresten und/oder Holz und/oder Knochenmehl sowohl als Einzelstoff oder als Gemisch daraus.

Als Lösungsmittel 9 werden flüssige Verbindungen bezeichnet, die feste, flüssige und gasförmige Substanzen lösen können, ohne diese oder sich selbst chemisch zu verändern. Bei einem Lösevorgang wird die Gitterenergie der Verbindung aufgehoben. Dabei werden energetisch weniger fest gebundene Moleküle oder Ionen einer Verbindung durch das Lösungsmittel 9 herausgelöst, in Form einer Hülle abgefangen und stabilisiert. Ebenso müssen die inneren Kräfte der Lösungsmittelmoleküle überwunden werden. Die benötigte Energie wird aus der Anziehung zwischen den gelösten Schadstoffen 7 und dem Lösungsmittel 9 erhalten. Im Fall von Wasser bezeichnet man diesen Vorgang als Hydratisierung, bei anderen Lösungsmitteln 9 von Solvatisierung. Neben Wasser, das sich durch seine Fähigkeit zur dreidimensionalen Ausbildung von Wasserstoffbrücken auszeichnet, werden viele anorganische und organische Flüssigkeiten als Lösungsmittel 9 eingesetzt. Sie gehören zu den nichtwässrigen Systemen und werden nach ihrer Fähigkeit zur Abgabe von Protonen oder anderen Ionen und ihrer Polarität in die Kategorien protisch, aprotisch unpolar und aprotisch polar unterteilt. Darüber hinaus wird mit Lösungsmittel 9 auch beliebige Mischungen aus unterschiedlichen Lösungsmitteln 9 bezeichnet.

Der Behälter 5 weist einen Ausgangsstoffzulauf 12, einen Lösungsmittelzulauf 13 und einen Behälterablauf 14 auf. Des Weiteren kann der Behälter 5 eine Wärmeübertragungseinrichtung 15 umfassen, die geeignet ist dem die erste Suspension 6 aufweisenden Behälter 5 Wärme zu- oder abzuführen und so den Behälter 5 zu temperieren. Der Behälter 5 ist dementsprechend zweckmäßigerweise als Doppelmantelbehälter 16 ausgebildet. In dem Behälter 5 werden nach der Zugabe des den Schadstoff 7 enthaltenden Ausgangsstoffes 8 und des Lösungsmittels 9, während eines als Extraktionszeit bezeichneten Zeitraums, durch das Lösungsmittel 9 die Schadstoffe 7, insbesondere die Schwermetalle, aus dem Ausgangsstoff 8 der ersten Suspension 6 herausgelöst, wodurch sich die Schadstoffe 7 in dem Ausgangsstoff 8 ab- und im Lösungsmittel 9 anreichern. Weitere Schadstoffe 7 sind durch das Lösungsmittel 9 ebenfalls vom Ausgangsstoff 8 extrahierbar. Die Anreicherung des Lösungsmittels 9 erfolgt, bis die maximale Beladung des Lösungsmittels 9 erreicht ist. Die erste Suspension 6 weist bevorzugt eine Extraktionszeit von insbesondere bis zu 90 min auf. Allerdings können auch deutlich längere Extraktionszeiten von Tagen und Wochen notwendig sein, abhängig von eingesetzten Ausgangsstoff 8 und Lösungsmittel 9. In entsprechenden Fällen wird die erste Suspension 6 dann in nicht gezeigten als Pufferspeichern ausgebildeten Behältern zwischengelagert.

Um ein möglichst schnelles und vollständiges Herauslösen der insbesondere als Schwermetalle ausgebildeten Schadstoffe 7 aus dem Ausgangsstoff 8 zu erreichen, müssen dem Lösungsmittel 9 große Austauschflächen und kurze Diffusionswege geboten werden, d. h. die Kinetik der Extraktion wird beschleunigt. Das kann durch das Zerkleinern des die Schadstoffe 7 enthaltenden Ausgangsstoffes 8 mittels einer der Aufbereitungseinheit 3 zugeordneten Mahleinrichtung 17 erreicht werden, wodurch sich auch die Prozessstabilität steigert. Die optimierte Extraktionskinetik führt zu einer Zeitersparnis und somit zu einer kürzeren Extraktionszeit. Gleichzeitig wird zudem die Verstopfungsgefahr an Engstellen in der Vorrichtung 1, insbesondere an Ventilen, an Klappen und Schiebern oder dergleichen, reduziert.

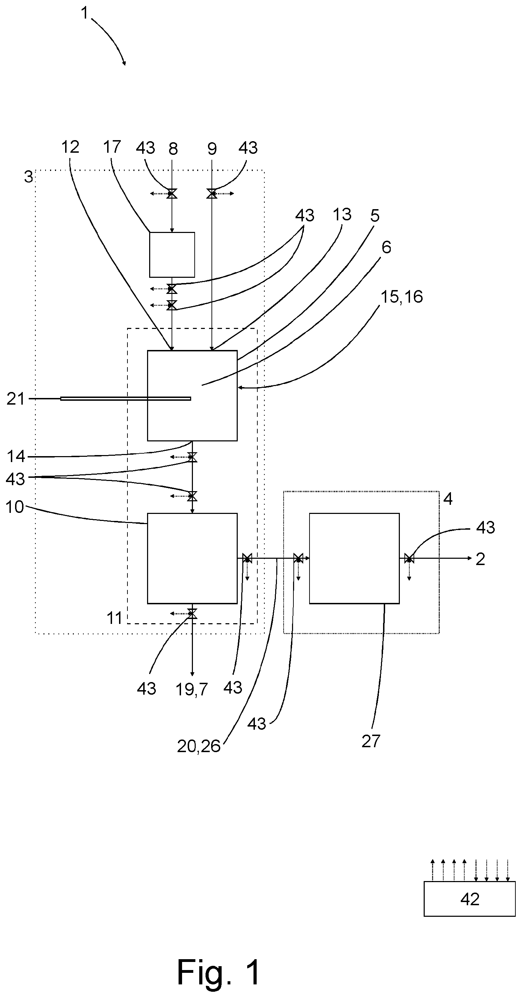

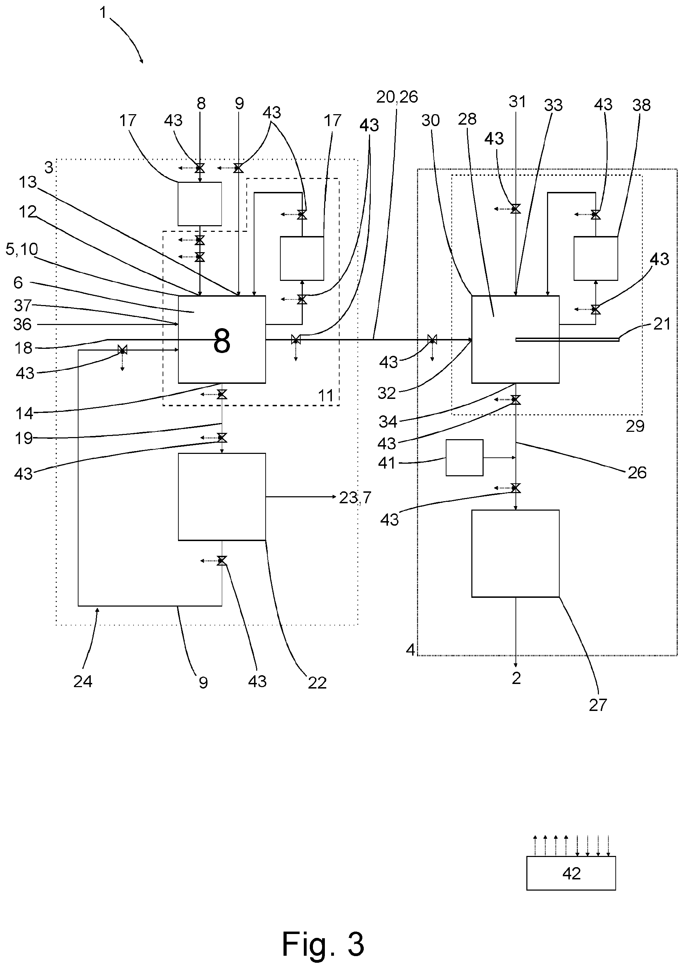

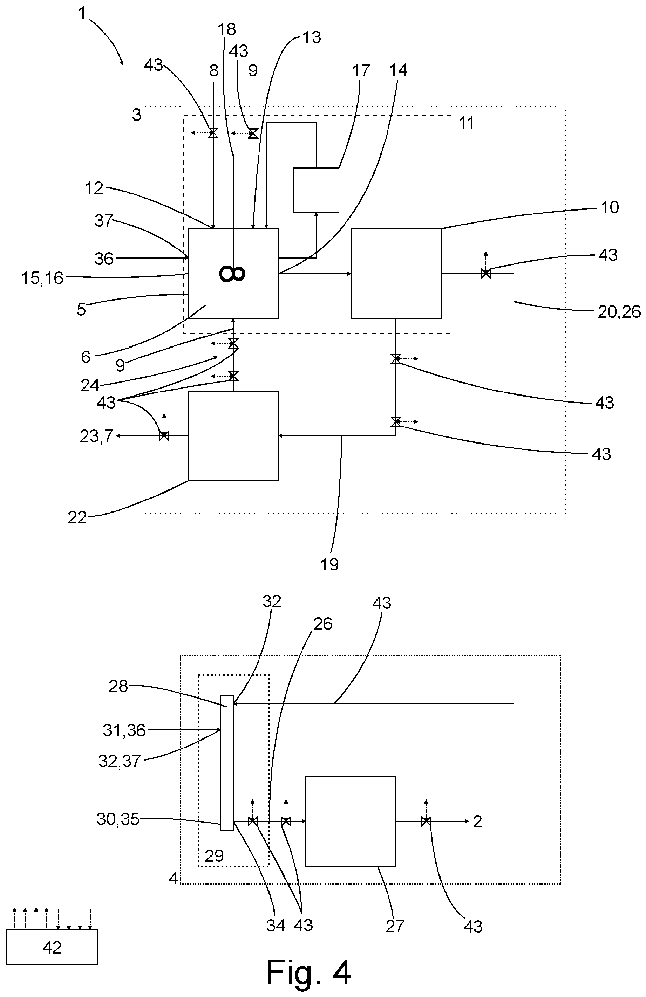

Die Mahleinrichtung 17 kann vor und/oder an dem Behälter 5 zur Herstellung der ersten Suspension 6 angeordnet sein. In der Mahleinrichtung 17 werden die Ausgangsstoffe 8 zur Herstellung der ersten Suspension 6 zerkleinert, sodass diese einen durchschnittlichen Partikeldurchmesser von bevorzugt kleiner gleich 5 *µ*m aufweisen. Wird der Mahlvorgang - auch als Mahlschritt bezeichnet - vor der Herstellung der ersten Suspension 6 vor (stromauf) dem Behälter 5 durchgeführt, erfolgt dieser als Trockenmahlung der Ausgangsstoffe 8, wie in Fig. 1 dargestellt. Im Gegensatz hierzu wird eine Nassmahlung der Ausgangsstoffe 8 während der Herstellung der ersten Suspension 6 im Behälter 5 eingesetzt. Eine solche Nassmahlung mit anschließender Rückführung der ersten Suspension 6 in den Behälter 5 ist bspw. in Fig. 3 gezeigt. Bei einer Kombination von Trocken- und Nassmahlung im Verfahren findet der Mahlvorgang sowohl vor (stromauf) im Behälter 5 als auch während der Herstellung der ersten Suspension 6 im Behälter 5 statt, bspw. gezeigt in Fig. 4.

Durch den Einsatz der unterschiedlichen Mahlverfahren wird für den Anlagenbauer bei der Ausgestaltung des Verfahrens die Möglichkeit geschaffen auf die unterschiedlichen Ausgangsstoffe einzugehen und das Verfahren stets optimal an diese anzupassen und auf die Vorgaben, wie bspw. die Investitionskosten, der Betreiber einzugehen. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Ausgangsstoffe 8 frei und exakt einstellbar. Bei der Nassmahlung sind bei einem geringen spezifischen Energieverbrauch auch grobe Ausgangsstoffe verarbeitbar. Zudem weist die Rührwerkslagerung keine Produktberührung auf. Eine Kombination von Trocken- und Nassmahlung ermöglicht eine Nachmahlung der Ausgangsstoffe 8 und der ersten Suspension 6. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination von Trocken- und Nassmahlung den Einsatz von kontinuierlich und diskontinuierlich arbeitenden Mahleinrichtungen 17, wie bspw. Mühlen, möglich.

Bei der einfachsten Form des Herauslösens werden Ausgangsstoff 8 und Lösungsmittel 9 miteinander gut vermischt. Zweckmäßigerweise ist hierzu im Behälter 5 eine Mischeinrichtung 18 angeordnet, u.a. dargestellt in Fig. 1. Anschließend wird das Extrakt 19 mit den nun darin gelösten Schadstoffen 7 innerhalb einer der Extraktionsstufe 11 zugeordneten Trenneinrichtung 10 zumindest teilweise vom Raffinat 20 abgetrennt, wobei die Trenneinrichtung 10 einen Extrakt- und einen Raffinatablauf und einen Trenneinrichtungsablauf aufweist. Als Trenneinrichtung 10 werden zweckmäßigerweise Abscheider, Filtereinrichtungen, wie insbesondere Filterpressen, Zentrifugen oder dergleichen eingesetzt. In der in Fig. 3 dargestellten Ausführungsform sind Behälter 5 und Trenneinrichtung 10 als bauliche Einheit ausgebildet.

Zweckmäßigerweise wird der ersten Suspension 6 mechanische Energie zum Aufbruch von Agglomeraten zugeführt, insbesondere mittels Ultraschall. Die Zufuhr der mechanischen Energie erfolgt mittels Homogenisiereinrichtung 21 und dient einer besseren Homogenisierung der ersten Suspension 6, insbesondere dem Aufbrechen von Agglomeraten und dadurch auch zur Reduktion der Extraktionszeit, sowie einer Senkung der Viskosität und damit einer Erhöhung der Fließfähigkeit. Hierzu verfügt die Aufbereitungseinheit 3 über eine zum Einbringen von mechanischer Energie geeignete Homogenisiereinrichtung 21, insbesondere in Form eines Plattenschwingers oder einer Sonotrode, die am Behälter 5 angeordnet ist.

Ferner verfügt die Aufbereitungseinheit 3 über eine einen Extraktzulauf und einen Regenerationseinrichtungsablauf aufweisende Regenerationseinrichtung 22, wie bspw. in Fig. 3 dargestellt. Die in der Regenerationseinrichtung 22 durchgeführte Regeneration - auch als Regenerationsschritt bezeichnet - des Extrakts 19 erfolgt meist durch eine Verdampfung/Destillation und/oder durch elektrochemische Aufbereitung des Extrakts mittels eines Platin-Grafit-Elektrodenpaars. Beider Verdampfung/Destillation wird das Lösungsmittel 9 verdampft und eine konzentrierte die Schadstoffe 7 enthaltenden Extraktlösung 23 bleibt zurück. Das Lösungsmittel 9 wird im Anschluss kondensiert und kann wiederverwendet werden. Auch die Extraktlösung 23 kann einer Weiterverarbeitung/Aufbereitung zur Schwermetallrückgewinnung zugeführt werden.

Die Aufbereitungseinheit 3 weist hierfür eine Rezirkulationseinrichtung 24 auf, wie bspw. in Fig. 4 gezeigt. Die Rezirkulationseinrichtung 24 ist geeignet, das aus dem Extrakt 19 regenerierte Lösungsmittel 9 in den Behälter 5 einer Extraktionsstufe 11 zu rezirkulieren. Durch eine derartige Rezirkulation wird der ursprünglich benötigte Lösungsmittelverbrauch erheblich gesenkt, da durch die Zufuhr des regenerierten Lösungsmittels 9 weniger frisches Lösungsmittel 9 zugeführt werden muss.

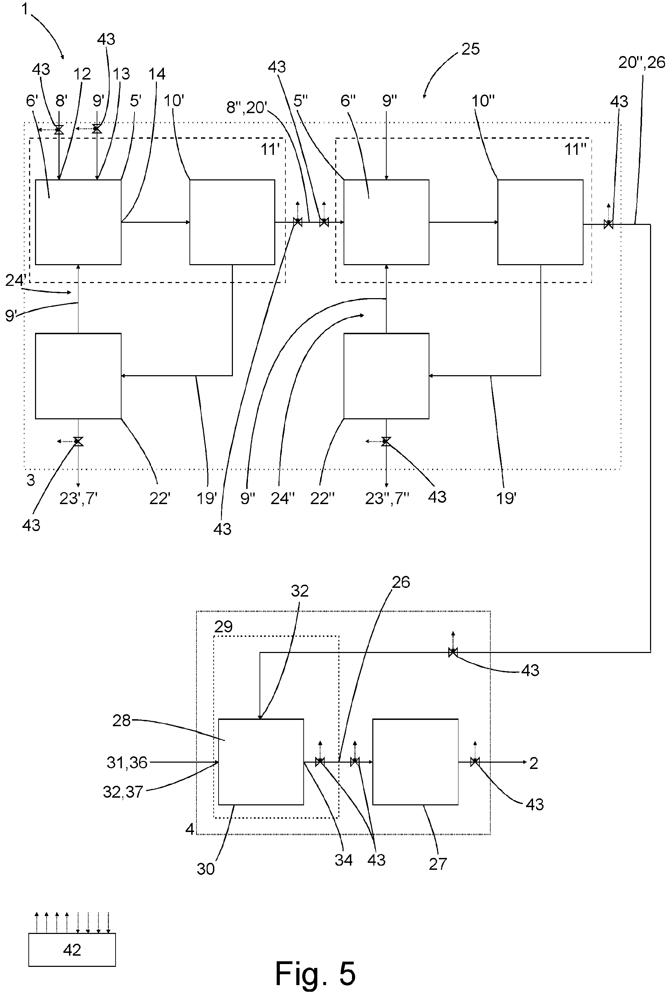

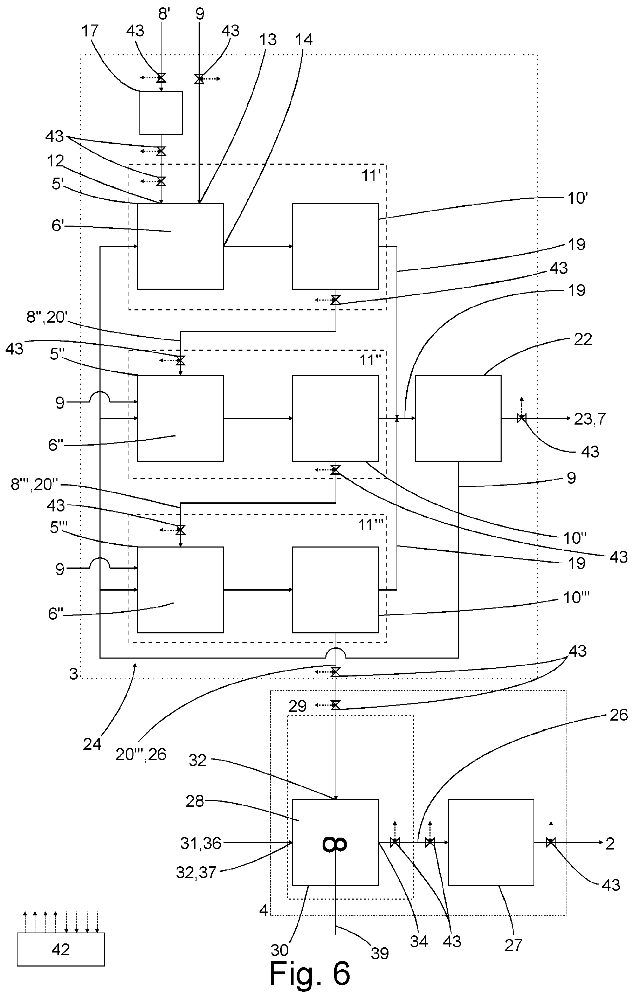

Die Aufbereitungseinheit 3 kann auch - wie bspw. in Fig. 5 und 6 dargestellt, über eine beliebige Anzahl an Extraktionsstufen 11 verfügen, die eine Aufbereitungskaskade 25 ausbilden. Fig. 5 zeigt eine Ausführungsform mit zwei Extraktionsstufen 11 und Fig. 6 eine Ausführungsform mit drei Extraktionsstufen 11. Zur besseren Unterscheidbarkeit der jeweils gleicher Gegenstände werden diese nachfolgend am Bezugszeichen mit ', ", ‴ usw. gekennzeichnet, bspw. bei der Extraktionsstufe 11', 11", 11‴. Eine Aufbereitungskaskade 25 kann dabei eine beliebige Anzahl an Extraktionsstufen 11 aufweisen, bspw. 2, 3, 4, ..., n. Jede Extraktionsstufe 11 bildet eine eigne Aufbereitungsphase aus.

In Fig. 5 ist jedem Behälter 5 eine Trenneinrichtung 10 zur zumindest teilweisen Abtrennung des Extrakts 19 aus der entsprechenden ersten Suspension 6, eine Regenerationseinrichtung 22 zur Regeneration des entsprechenden Extrakts 19 und eine Rezirkulationseinrichtung 24 zur Rezirkulation des regenerierten Lösungsmittels 9 zugeordnet. In der in Fig. 5 beschriebenen Ausführungsform der Vorrichtung 1 werden in den unterschiedlichen Extraktionsstufen 11 unterschiedliche Lösungsmittel 9, nämlich Lösungsmittel 9' und Lösungsmittel 9", eingesetzt.

Im Gegensatz hierzu ist in Fig. 6 den Behältern 5 zur Herstellung einer ersten Suspension 6 jeweils eine Trenneinrichtung 10 zugeordnet, wobei die Extrakte 19 über eine Sammeleinrichtung in der gemeinsamen Regenerationseinrichtung 22 regeneriert werden und das regenerierte Lösungsmittel 9 über eine gemeinsame Rezirkulationseinrichtung 24 rezirkuliert wird. In der Vorrichtung der Fig. 6 kommt ein gemeinsames Lösungsmittel 9 zum Einsatz. Hierbei wird die Aufbereitungsphase mit einem als Raffinat 20 ausbildeten Ausgangsstoff 8 zweimal wiederholt.

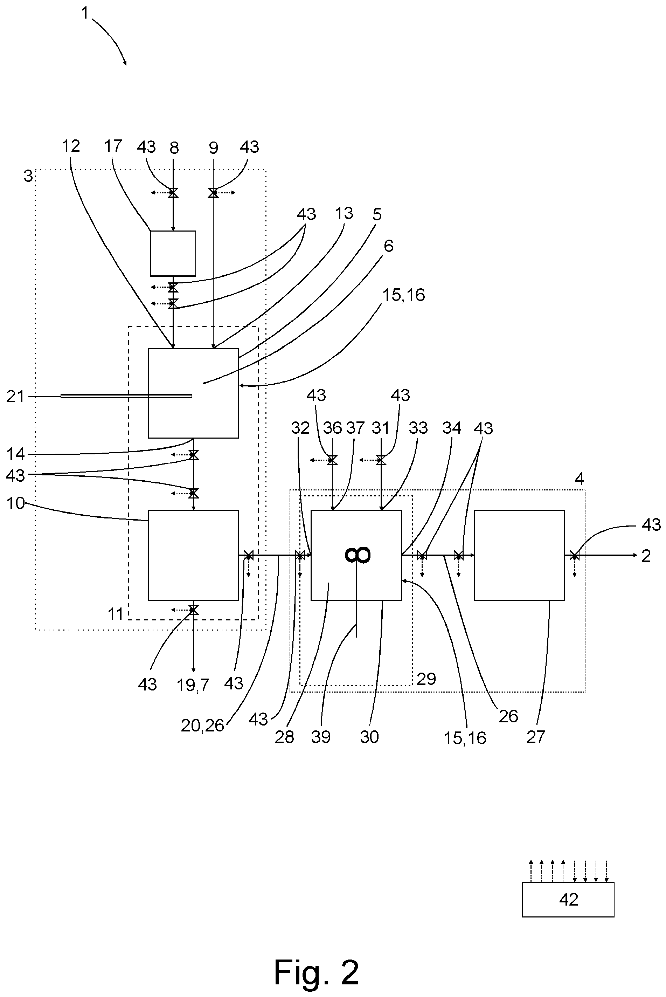

Das Raffinat 20 wird anschließend als Zwischenprodukt 26 von der Aufbereitungseinheit 3 der Herstellungseinheit 4 zugeführt. Als Raffinat 20 wird hierbei der Teil der ersten Suspension 6 bezeichnet, der nach dem teilweisen Abtrennen des Extrakts 20 aus der ersten Suspension 6 als sogenannter Suspensionsrückstand zurückbleibt. Nachfolgend wird die Herstellungseinheit 4 näher beschrieben:
Die Herstellungseinheit 4 verfügt über eine Pyrolyseeinrichtung 27. Diese weist einen als Einlass ausgebildeten Pyrolyseeinrichtungszulauf und einen als Auslass ausgebildeten Pyrolyseeinrichtungsablauf auf. Die Pyrolyseeinrichtung 27 ist bevorzugt als Drehrohrofen, als Pyrolyseofen oder als Granulationseinrichtung ausgebildet und ist geeignet das auf dem Raffinat 20 basierende Zwischenprodukt 26 unter Luftabschluss und ohne Sauerstoffzufuhr bei einem Arbeitsdruck zu erhitzen, sodass unter Erzeugung des Düngemittelgranulates 2 eine Pyrolyse des Zwischenprodukts 26 stattfindet. Hierzu kann das auf dem Raffinat 20 basierende Zwischenprodukt 26 vor dem Eintritt in die Pyrolyseeinrichtung 27 durch Zugabe zusätzlicher Stoffe angepasst/verändert werden. Besonders bevorzugt ist die Pyrolyseeinrichtung 26 als Granulationseinrichtung in Form eines Fluidisierungsapparates ausgebildet, insbesondere als Hochtemperatur-Wirbelschichtapparat oder Hochtemperatur-Strahlschichtapparat, sodass das als zweite Suspension 28 ausgebildete Zwischenprodukt 26 mittels Sprühgranulation oder Sprühagglomeration granuliert wird. Bspw. ist in Fig. 1 die Pyrolyseeinrichtung 27 als Pyrolyseofen, in Fig. 2 und 4 als Hochtemperatur-Wirbelschichtapparat und in Fig. 3 und 5 als Hochtemperatur-Strahlschichtapparat ausgebildet, wobei Fig. 6 einen Drehrohrofen zeigt.

Das Verfahren wird bevorzugt so durchgeführt, dass die zweite Suspension 28 kontinuierlich granuliert wird.

Zweckmäßigerweise wird das Zwischenprodukt 26, während der in der Pyrolyseeinrichtung 27 erfolgenden Pyrolyse auf eine Temperatur von 150 °C bis 1.500 °C erhitzt, insbesondere auf eine Temperatur zwischen 400 °C und 1.200 °C. Der Arbeitsdruck ist während der Pyrolyse als atmosphärischer Luftdruck ± 100 mbar ausgebildet.

Des Weiteren weist die Herstellungseinheit 4 eine Laugungseinrichtung 29 auf, die über einen Behälter 30 zur Herstellung einer zweiten Suspension 28 aus Raffinat 20 und einem Reaktionsmittel 31 verfügt, wie u.a. in der Fig. 2 dargestellt. Der Behälter 30 weist einen auch als Raffinatzulauf bezeichneten Zwischenproduktzulauf 32, einen Reaktionsmittelzulauf 33 und einen Behälterablauf 34 auf. Des Weiteren kann der Behälter 30 eine Wärmeübertragungseinrichtung 15 umfassen, die geeignet ist den die zweite Suspension 28 aufweisenden Behälter 30 Wärme zu- oder abzuführen und so den Behälter 30 zu temperieren. Der Behälter 30 ist dementsprechend zweckmäßigerweise als Doppelmantelbehälter 16 ausgebildet. Eine entsprechende Ausführungsform ist bspw. in Fig. 2 dargestellt. In einer weiter bevorzugten Ausführungsform wird das Reaktionsmittel 31 im Behälter 30 vorgelegt und diesem wird das Raffinat 20 zugegeben. Weiter bevorzugt weist das Reaktionsmittel 31 bei der Zugabe über den Reaktionsmittelzulauf 33 eine Temperatur von 10 °C bis 40 °C auf. Die zweite Suspension 28 weist zweckmäßigerweise einen Feststoffanteil von 30 % bis 70 % auf, insbesondere von 40 % bis 65 %.

Die Laugungseinrichtung 29, insbesondere der Behälter 30 zur Herstellung der zweiten Suspension 28, ist bevorzugt als Rohrreaktor 35 ausgebildet. Eine Ausgestaltung der Laugungseinheit 29 als Rohrreaktor 35 ist bspw. in Fig. 4 gezeigt.

Durch das Reaktionsmittel 31 wird das Raffinat 20 in dem Behälter 30 durch Reaktion des Raffinats 20 mit dem Reaktionsmittel 31 aufgeschlossen, während eines als Reaktionszeit bezeichneten Zeitraums, sodass sich die schwerlöslichen Phosphate in besser pflanzenverwertbare Phosphate umwandeln. Die Reaktionszeit zwischen Raffinat 20 und Reaktionsmittel 31, insbesondere der Säure, beträgt zweckmäßigerweise bis zu 90 min. Während der Reaktionszeit steigt die Temperatur im Behälter 30 aufgrund der Reaktion zwischen als Raffinat 20 ausgebildeten Zwischenprodukt 26 und Reaktionsmittel 31 an, sodass die zweite Suspension 28 im Behälter 30 während der Reaktionszeit bevorzugt eine Temperatur zwischen 20 °C und 80 °C aufweist. Die Wärmeübertragungseinrichtung 15 ist geeignet, die Temperatur der zweiten Suspension 28 im Behälter 30 entsprechend einzuregeln.

Der Behälter 5 zur Herstellung der ersten Suspension 6 und der Behälter 30 zur Herstellung der zweiten Suspension 28 können, wie beispielhaft in Fig. 2 dargestellt, als separate Behälter 5, 30 ausgebildet sein. Im Gegensatz dazu ist es auch möglich, wie in einer nicht gezeigten Ausführungsform realisiert, dass der Behälter 5 zur Herstellung der ersten Suspension 6 und der Behälter 30 zur Herstellung der zweiten Suspension 28 als ein Behälter 5, 30 ausgebildet ist.

Als Reaktionsmittel 31 wird eine Säure oder eine Lauge bezeichnet, wobei zweckmäßigerweise die Säure eine mineralische und/oder eine organische Säure oder eine beliebige Mischung aus diesen ist. Als organische Säure werden bevorzugt kurzkettige Carbonsäuren mit einer Anzahl von bis zu sechs Kohlenstoffatomen eingesetzt, wie bspw. Ameisen-, Essig-, Zitronen-, Glykol, Diglykolsäure. Weiter bevorzugt weist die organische Säure ein Kohlenstoff-Sauerstoff-Verhältnis von 1:1 oder 1:2 auf. Die Temperatur des Reaktionsmittels 31 bei der Zugabe im Bereich 10 °C bis 40 °C reduziert insbesondere die Degeneration der Reaktionsmittel 31.

Der ersten Suspension 6 und/oder der zweiten Suspension 28 können Additive 36 zugeführt, wobei als Additive 36 insbesondere Phosphor, Schwefel und Stickstoff gelten. Bspw. werden auch Wasser, getrockneter Klärschlamm oder Ligninsulfonat als Additiv 36 verwendet. Die Zugabe der Additive 36 erfolgt in der für das herzustellende Düngemittelgranulat 2 erforderlichen Menge und in beliebiger Kombination der Additive 36 über einen Additivzulauf 37. Bevorzugt erfolgt die Zugabe der Additive 36 jedoch während der Herstellung der zweiten Suspension 28 im Behälter 30.

Zur Anreicherung mit Phosphor können der ersten und/oder der zweiten Suspension 6, 28 Phosphorquellen wie beispielsweise Apatit, Hydroxylapatit, Monocalciumphosphat (MCP), Dicalciumphosphat (DCP), Dicalciumphosphat (DCP), Tricalciumphospaht (TCP) oder Monoammoniumphoshat (MAP) oder Kaliumdihydrogenphosphat in beliebiger Menge oder Kombination zugeführt werden. Auch durch einen Aufschluss des auch als Suspensionsrückstand bezeichneten Raffinats 20, das auch als Zwischenprodukt 26 bezeichnet wird, in der zweiten Suspension 28 mit Phosphorsäure als Reaktionsmittel 31 kann eine Anreicherung mit Phosphor erzielt werden.

Eine Anreicherung mit Schwefel kann zweckmäßigerweise durch den Aufschluss des als Raffinat 20 ausgebildeten Zwischenprodukts mit Schwefelsäure als Reaktionsmittel 31 in der zweiten Suspension 28 erfolgen, d. h. in der in der Herstellungseinheit 4 durchgeführten Herstellungsphase. Darüber hinaus wird auch durch die Zugabe von bspw. Alkali- oder Erdalkalisulfaten zu der ersten und/oder zweiten Suspension 6, 28 eine Anreichung mit Schwefel , insbesondere elementarem Schwefel, erreicht. Auch die Verwendung von Ammoniumsulfat, bspw. in Lösung, ist sehr gut geeignet, um den Schwefelanteil entsprechend zu erhöhen.

Eine Anreicherung des Düngemittelgranulates 2 mit Stickstoff wird dadurch erreicht, dass das als Raffinat 20 ausgebildete Zwischenprodukt 26 in der Herstellungsphase mit Salpetersäure als Reaktionsmittel 31 versetzt wird, bevorzugt bei der Herstellung der zweiten Suspension 28. Außerdem kann der ersten und/oder zweiten Suspension 6, 28 zur Anreicherung mit Stickstoff Harnstoff und/oder Ammoniumsulfat, zweckmäßigerweise in Lösung, zugegeben werden. Insbesondere im Ammoniumsulfat liegt der Stickstoff als NH4+ vor, was zu einer verbesserten Pflanzenverfügbarkeit und/oder einer verbesserten Versorgung der Pflanzen mit Stickstoff führt.

Für die Herstellung eines NPK-Düngemittelgranulats 2 ist die Zugabe von unterschiedlichen der vorgenannten Additive 36 notwendig, zweckmäßigerweise insbesondere von Salpetersäure, Harnstoff, DCP und/oder Kaliumsalzen, wie Kaliumnitrat, Kaliumchlorid oder Kaliumdihydrogenphosphat.

Für einen weiter verbesserten Ausschluss des als Raffinats 20 ausgebildeten Zwischenprodukts 26 müssen dem Reaktionsmittel 31 große Austauschflächen mit dem Zwischenprodukt 26 geboten werden, sodass die Reaktionskinetik beschleunigt wird. Das kann durch das Zerkleinern des Zwischenprodukts 26, falls notwendig, mittels einer Mahleinrichtung 38 erreicht werden. Auch die verbesserte Reaktionskinetik führt zu einer Zeitersparnis und somit zu einer kürzeren Reaktionszeit. Gleichzeitig wird zudem die Verstopfungsgefahr an Engstellen in der Vorrichtung 1, insbesondere an Düsen einer an die Laugungseinrichtung 29 anschließenden bevorzugt als Granulationseinrichtung ausgebildeten Pyrolyseeinrichtung 27, reduziert.

Die Mahleinrichtung 38 kann vor (stromauf) und/oder an dem Behälter 30 zur Herstellung der zweiten Suspension 28 angeordnet sein. In der Mahleinrichtung 38 wird das als Raffinat 20 ausgebildete Zwischenprodukt 26 zur Herstellung der zweiten Suspension 28 zerkleinert, sodass diese einem durchschnittlichen Partikeldurchmesser von bevorzugt kleiner gleich 5 *µ*m, insbesondere zwischen 50 nm und 3 *µ*m, aufweisen. Der Mahlvorgang erfolgt bevorzugt als Nassmahlung des als Raffinat 20 ausgebildeten Zwischenprodukts 26, wie bspw. in Fig. 4 gezeigt. Bei der Nassmahlung sind als Vorteile ein geringer spezifischer Energieverbrauch und auch die Verarbeitbarkeit groben Raffinats hervorzuheben. Zudem weist die Rührwerkslagerung keine Berührung mit der zweiten Suspension 28 auf.

Ideallerweise werden das als Raffinat 20 ausgebildete Zwischenprodukt 26 und Reaktionsmittel 31 im Behälter 30 miteinander gut vermischt. Zweckmäßigerweise ist hierzu im Behälter 30 eine Mischeinrichtung 39 angeordnet, die bevorzugt als Blatt- oder Bandmischer ausgebildet ist, siehe insbesondere Fig. 2.

Zweckmäßigerweise wird auch der zweiten Suspension 28 mechanische Energie zum Aufbruch von Agglomeraten zugeführt, insbesondere mittels Ultraschall. Die Zufuhr der mechanischen Energie dient einer besseren Homogenisierung der zweiten Suspension 28 und dadurch auch zur Reduktion der Reaktionszeit, sowie einer Senkung der Viskosität und damit einer Erhöhung der Fließfähigkeit. Der Behälter 30 der Herstellungseinheit 4 weist zum Einbringen von mechanischer Energie eine Homogenisiereinrichtung 40 auf, insbesondere in Form eines Plattenschwingers oder einer Sonotrode. Eine solche im Behälter 30 angeordnete Homogenisierungseinrichtung 40 ist bspw. in Fig. 3 dargestellt.

Zu Durchführung eines kontinuierlichen Verfahrens sind zweckmäßigerweise nicht dargestellte Pufferbehälter auszuführen, um die Ausgangsstoffe 8, das Lösungsmittel 9, das Zwischenprodukt 26 und das Reaktionsmittel 31, insbesondere aber die zweite Suspension 28 zu bevorraten. Diese Bevorratung kann im Fall von Teilausfällen helfen das Verfahren kontinuierlich weiter zu betreiben.

Überdies kann die Herstellungseinheit 4 über eine pH-Wert-Regeleinrichtung 41 verfügen. Bevorzugt ist diese in der Herstellungseinheit 4 stromauf der bevorzugt als Granulationseinrichtung ausgebildeten Pyrolyseeinrichtung 27 angeordnet. Durch eine pH-Wert Regelung mittels pH-Wert-Regeleinrichtung 41, wie bspw. in Fig. 3 gezeigt, besteht die Möglichkeit den pH-Wert der sich aus Raffinat 20 und Reaktionsmittel 31 bildenden zweiten Suspension 28 einzustellen. Die Einstellung des pH-Werts der zweiten Suspension 28 wirkt sich auf die Klebrigkeit der zweiten Suspension 28 aus, die wiederum für das Verdüsen des als zweiten Suspension 28 ausgebildeten Zwischenprodukts 26 mittels der als Granulationseinrichtung ausgebildeten Pyrolyseeinrichtung 27 von sehr großer Bedeutung ist. Je saurer die Suspension, desto klebriger ist diese. Bevorzugt erfolgt pH-Wert Messung und die Zudosierung der den pH-Wert einstellenden zusätzlichen Säure oder Lauge in dem Behälter 30, der die zweite Suspension 28 aufweist. Die Einstellung des pH-Wertes erfolgt hierbei über die pH-Wert-Regeleinrichtung 41. Die pH-Wert Regelung kann auch als zusätzlicher, externer Regelkreis ausgebildet sein.

Die Vorrichtung 1 zur Herstellung von Düngemittelgranulat 2 wird bevorzugt mit einer Steuerungseinrichtung 42 geregelt und/oder gesteuert. Zweckmäßigerweise sind hierzu in allen Zu- und Abläufen der jeweiligen Einrichtungen, wie Behälter 5, 30, Trenneinrichtung 10, Regenerationseinrichtung 22, Rezirkulationseinrichtung 24, Pyrolyseeinrichtung 27 usw. Regelventile 40 verbaut, die von der Steuerungseinrichtung 42 regel- und/oder steuerbar sind. Auch die vorgenannten einzelnen Einrichtungen der Vorrichtung 1 sind alle regel- und/oder steuerbar.

## Patentansprüche

1. Verfahren zur Herstellung von Düngemittelgranulat (2) aus einem aufbereiteten als Verbrennungsrückstand ausgebildeten Ausgangsstoff (8), **dadurch gekennzeichnet, dass** in einer Aufbereitungsphase eine erste Suspension (6) aus dem Ausgangsstoff (8) und einem Lösungsmittel (9) hergestellt wird, wodurch in der ersten Suspension (6) im Ausgangsstoff (8) gebundene Schadstoffe (7) durch das Lösungsmittel (9) zumindest teilweise aus dem Ausgangsstoff (8) herausgelöst werden, um dann zur Gewinnung eines Raffinats (20) das Extrakt (19) zumindest teilweise von der ersten Suspension (6) abzutrennen, um in einer sich an die Aufbereitungsphase anschließenden Herstellungsphase ein auf dem Raffinat (20) basierendes Zwischenprodukt (26) unter Luftabschluss und ohne Sauerstoffzufuhr bei einem Arbeitsdruck zu erhitzen, sodass unter Erzeugung des Düngemittelgranulates (2) eine Pyrolyse des Zwischenprodukts (26) stattfindet.

2. Verfahren nach Anspruch 1, **dadurch gekennzeichnet, dass** das Zwischenprodukt (26) während der Pyrolyse auf eine Temperatur von 150 °C bis 1.500 °C erhitzt wird, insbesondere auf eine Temperatur zwischen 400 °C und 1.200 °C.

3. Verfahren nach Anspruch 1 oder 2, **dadurch gekennzeichnet, dass** der Arbeitsdruck als atmosphärischer Luftdruck plus minus 100 mbar ausgebildet ist.

4. Verfahren nach einem der vorhergehenden Ansprüche, **dadurch gekennzeichnet, dass** in einem Regenerationsschritt das in der Aufbereitungsphase zumindest teilweise von der ersten Suspension (6) abgetrennte Extrakt (19) regeneriert wird und zur Herstellung der ersten Suspension (6) rezirkuliert wird, wobei zweckmäßigerweise die Regeneration des Extrakts (19) mittels Ionenselektion und/oder Fällung und/oder Extraktion und/oder Verdampfung/Destillation und/oder elektrochemischer Aufreinigung erfolgt und die Fällung bevorzugt als Sulfidfällung unter Verwendung von Thiosulfat-Salzen erfolgt.

5. Verfahren nach einem der vorhergehenden Ansprüche, **dadurch gekennzeichnet, dass** die Aufbereitungsphase mit einem als Raffinat (20) ausbildeten Ausgangsstoff (8) einmal oder mehrmals wiederholt wird, wobei zweckmäßigerweise in unterschiedlichen Aufbereitungsphasen unterschiedliche Lösungsmittel (9) eingesetzt werden.

6. Verfahren nach einem der vorhergehenden Ansprüche, **dadurch gekennzeichnet, dass** in der Herstellungsphase vor der Pyrolyse eine zweite Suspension (28) aus Raffinat (20) und Reaktionsmittel (31) als Zwischenprodukt (26) hergestellt wird, wobei das Reaktionsmittel (31) insbesondere eine Säure oder eine Lauge ist, wobei zweckmäßigerweise die Säure eine mineralische und/oder organische Säure oder eine beliebige Mischung aus diesen ist.

7. Verfahren nach einem der vorhergehenden Ansprüche, **dadurch gekennzeichnet, dass** der Ausgangsstoff (8) vor und/oder die erste Suspension (6) während der Aufbereitungsphase in einem Mahlschritt gemahlen wird.

8. Verfahren nach einem der vorhergehenden Ansprüche, **dadurch gekennzeichnet, dass** das auf dem Raffinat (20) basierende Zwischenprodukt (26) vor und/oder während der Herstellungsphase in einem Mahlschritt gemahlen wird.

9. Verfahren nach einem der vorhergehenden Ansprüche, **dadurch gekennzeichnet, dass** während der Reaktionszeit eine Temperatur der zweiten Suspension (28) zwischen 20 °C und 80 °C vorherrscht.

10. Verfahren nach einem der vorhergehenden Ansprüche, **dadurch gekennzeichnet, dass** das als zweite Suspension (28) ausgebildete Zwischenprodukt (26) mittels Sprühgranulation oder Sprühagglomeration granuliert wird.

11. Vorrichtung (1) zur Herstellung von Düngemittelgranulat (2) aus einem aufbereiteten als Verbrennungsrückstand ausgebildeten Ausgangsstoff (8), **dadurch gekennzeichnet, dass** die Vorrichtung (1) eine Aufbereitungseinheit (3) mit einer Extraktionsstufe (11) aufweist, die über einen Behälter (5) zur Herstellung einer ersten Suspension (6) aus dem Ausgangsstoff (8) und einem Lösungsmittel (9) verfügt, und mit einer Trenneinrichtung (10) zur zumindest teilweisen Abtrennung des Extrakts (19) aus der ersten Suspension (6) zur Gewinnung eines Raffinats (20) und, dass die Vorrichtung (1) ferner über eine stromab der der Aufbereitungseinheit (3) angeordnete Herstellungseinheit (4) verfügt, die eine Laugungseinrichtung (29) aufweist, wobei die Laugungseinrichtung (29) über einen Behälter (30) zur Herstellung einer zweiten Suspension (28) aus dem Raffinat (20) und dem Reaktionsmittel (31) verfügt, und die eine Pyrolyseeinrichtung (27) zur Erzeugung des Düngemittelgranulates (2) aus einem auf dem Raffinat (20) basierenden Zwischenprodukt (26) aufweist, wobei die Pyrolyseeinrichtung (27) zur Durchführung einer Pyrolyse unter Luftabschluss und ohne Sauerstoffzufuhr ausgebildet ist.

12. Vorrichtung (1) nach Anspruch 11, **dadurch gekennzeichnet, dass** die Pyrolyseeinrichtung (27) als Granulationseinrichtung in Form eines Fluidisierungsapparates ausgebildet ist, insbesondere als Hochtemperatur-Wirbelschichtapparat oder Hochtemperatur-Strahlschichtapparat.

13. Vorrichtung (1) nach Anspruch 11 oder 12, **dadurch gekennzeichnet, dass** die Aufbereitungseinheit (3) mehrere Behälter (5) zur Herstellung einer Suspension (6) und eine oder mehrere Trenneinrichtungen (10) zur zumindest teilweisen Abtrennung des Extrakts (19) aus der entsprechenden Suspension (6) aufweist, wobei den mehreren Behältern (5) die eine Trenneinrichtung (10) oder jedem Behälter (5) eine separate Trenneinrichtung (10) zugeordnet ist.

14. Vorrichtung (1) nach einem der Ansprüche 11 bis 13, **dadurch gekennzeichnet, dass** die Aufbereitungseinheit (3) über eine oder mehrere Regenerationseinrichtungen (22) für das Extrakt (19) verfügt, wobei zweckmäßigerweise die Aufbereitungseinheit (3) eine oder mehrere Rezirkulationseinrichtungen (24) für das regenerierte Lösungsmittel (9) aufweist.

## Claims

1. Method for the production of fertilizer granules (2) from a processed starting material (8) configured as a combustion residue, **characterized in that** in a processing phase, a first suspension (6) is produced from the starting material (8) and a solvent (9), whereby in the first suspension (6), pollutants (7) bound in the starting material (8) are at least partially leached out of the starting material (8) by the solvent (9), in order to then at least partially separate the extract (19) from the first suspension (6) to obtain a raffinate (20), in order to heat, in a production phase following the processing phase, an intermediate product (26) based on the raffinate (20) with exclusion of air and without supply of oxygen at a working pressure, so that a pyrolysis of the intermediate product (26) takes place while producing the fertilizer granules (2).

2. Method according to claim 1, **characterized in that** the intermediate product (26) is heated to a temperature of 150 °C to 1,500 °C during the pyrolysis, in particular to a temperature between 400 °C and 1,200 °C.

3. Method according to claim 1 or 2, **characterized in that** the working pressure is configured as atmospheric air pressure plus or minus 100 mbar.

4. Method according to any one of the preceding claims, **characterized in that** in a regeneration step, the extract (19) at least partially separated from the first suspension (6) in the processing phase is regenerated and recirculated for the production of the first suspension (6), wherein expediently the regeneration of the extract (19) takes place by means of ion selection and/or precipitation and/or extraction and/or evaporation/distillation and/or electrochemical purification and the precipitation preferably takes place as sulfide precipitation using thiosulfate salts.

5. Method according to any one of the preceding claims, **characterized in that** the processing phase is repeated once or several times with a starting material (8) configured as a raffinate (20), wherein expediently different solvents (9) are used in different processing phases.

6. Method according to any one of the preceding claims, **characterized in that** in the production phase before the pyrolysis, a second suspension (28) of raffinate (20) and reactant (31) is produced as an intermediate product (26), wherein the reactant (31) is in particular an acid or a lye, wherein expediently the acid is a mineral and/or organic acid or any mixture thereof.

7. Method according to any one of the preceding claims, **characterized in that** the starting material (8) is ground in a grinding step before and/or the first suspension (6) is ground in a grinding step during the processing phase.

8. Method according to any one of the preceding claims, **characterized in that** the intermediate product (26) based on the raffinate (20) is ground in a grinding step before and/or during the production phase.

9. Method according to any one of the preceding claims, **characterized in that** a temperature of the second suspension (28) between 20 °C and 80 °C prevails during the reaction time.

10. Method according to any one of the preceding claims, **characterized in that** the intermediate product (26) configured as a second suspension (28) is granulated by means of spray granulation or spray agglomeration.

11. Apparatus (1) for the production of fertilizer granules (2) from a processed starting material (8) configured as a combustion residue, **characterized in that** the apparatus (1) has a processing unit (3) with an extraction stage (11) which has a container (5) for the production of a first suspension (6) from the starting material (8) and a solvent (9), and with a separating device (10) for at least partially separating the extract (19) from the first suspension (6) to obtain a raffinate (20) and **in that** the apparatus (1) furthermore has a production unit (4) arranged downstream of the processing unit (3) which has a leaching device (29), wherein the leaching device (29) has a container (30) for the production of a second suspension (28) from the raffinate (20) and the reactant (31), and which has a pyrolysis device (27) for producing the fertilizer granules (2) from an intermediate product (26) based on the raffinate (20), wherein the pyrolysis device (27) is configured to carry out a pyrolysis with exclusion of air and without supply of oxygen.

12. Apparatus (1) according to claim 11, **characterized in that** the pyrolysis device (27) is configured as a granulation device in the form of a fluidization apparatus, in particular as a high-temperature fluidized bed apparatus or a high-temperature spouted bed apparatus.

13. Apparatus (1) according to claim 11 or 12, **characterized in that** the processing unit (3) has several containers (5) for the production of a suspension (6) and one or more separating devices (10) for at least partially separating the extract (19) from the corresponding suspension (6), wherein the one separating device (10) is assigned to the several containers (5) or a separate separating device (10) is assigned to each container (5).

14. Apparatus (1) according to any one of the claims 11 to 13, **characterized in that** the processing unit (3) has one or more regeneration devices (22) for the extract (19), wherein expediently the processing unit (3) has one or more recirculation devices (24) for the regenerated solvent (9).

## Revendications

1. Procédé de fabrication de granulés d'engrais (2) à partir d'une matière première (8) préparée réalisée en tant que résidu de combustion, **caractérisé en ce qu'**une première suspension (6) est fabriquée dans une phase de préparation à partir de la matière première (8) et d'un solvant (9), ce qui a pour effet que les polluants (7) liés dans la première suspension (6) dans la matière première (8) sont dissous au moins partiellement de la matière première (8) par le solvant (9), pour ensuite, afin d'obtenir un raffinat (20), séparer l'extrait (19) au moins partiellement de la première suspension (6) afin de chauffer, dans une phase de fabrication qui suit la phase de préparation, un produit intermédiaire (26) à base de raffinat (20) à l'abri de l'air et sans apport d'oxygène à une pression de travail, de sorte qu'une pyrolyse du produit intermédiaire (26) a lieu, entraînant la production de granulat d'engrais (2).

2. Procédé selon la revendication 1, **caractérisé en ce que** le produit intermédiaire (26) est chauffé pendant la pyrolyse à une température de 150 °C à 1500 °C, en particulier à une température comprise entre 400 °C et 1200 °C.

3. Procédé selon la revendication 1 ou 2, **caractérisé en ce que** la pression de travail est réalisée en tant que pression atmosphérique de plus ou moins 100 mbar.

4. Procédé selon l'une quelconque des revendications précédentes, **caractérisé en ce que**, dans une étape de régénération, l'extrait (19) séparé au moins partiellement de la première suspension (6) dans la phase de préparation est régénéré et est recyclé pour la fabrication de la première suspension (6), dans lequel la régénération de l'extrait (19) est effectuée de manière avantageuse par sélection d'ions et/ou précipitation et/ou extraction et/ou évaporation/distillation et/ou purification électrochimique et la précipitation est effectuée de préférence en tant que précipitation de sulfure à l'aide de sels de thiosulfate.

5. Procédé selon l'une quelconque des revendications précédentes, **caractérisé en ce que** la phase de préparation avec une matière première (8) réalisée en tant que raffinat (20) est répétée une ou plusieurs fois, dans lequel de manière avantageuse des solvants (9) différents sont utilisés dans différentes phases de préparation.

6. Procédé selon l'une quelconque des revendications précédentes, **caractérisé en ce que** dans la phase de fabrication précédant la pyrolyse, une seconde suspension (28) est fabriquée à partir de raffinat (20) et de réactif (31) en tant que produit intermédiaire (26), dans lequel le réactif (31) est notamment un acide ou une base, dans lequel de manière avantageuse l'acide est un acide minéral et/ou organique ou un mélange quelconque de ceux-ci.

7. Procédé selon l'une quelconque des revendications précédentes, **caractérisé en ce que** la matière première (8) est broyée avant et/ou la première suspension (6) pendant la phase de préparation en une seule étape de broyage.

8. Procédé selon l'une quelconque des revendications précédentes,
**caractérisé en ce que** le produit intermédiaire (26) à base de raffinat (20) est broyé en une étape de broyage avant et/ou pendant la phase de fabrication.

9. Procédé selon l'une quelconque des revendications précédentes,
**caractérisé en ce que** pendant le temps de réaction, une température de la seconde suspension (28) comprise entre 20 °C et 80 °C prédomine.

10. Procédé selon l'une quelconque des revendications précédentes,
**caractérisé en ce que** le produit intermédiaire (26) réalisé en tant que seconde suspension (28) est granulé au moyen d'une granulation par pulvérisation ou agglomération par pulvérisation.

11. Dispositif (1) pour la fabrication de granulés d'engrais (2) à partir d'une matière première (8) préparée réalisée en tant que résidu de combustion, **caractérisé en ce que** le dispositif (1) présente une unité de préparation (3) avec un étage d'extraction (11) qui dispose d'un récipient (5) pour la fabrication d'une première suspension (6) à partir de la matière première (8) et d'un solvant (9), et avec un
équipement de séparation (10) pour séparer au moins partiellement l'extrait (19) de la première suspension (6) pour l'obtention d'un raffinat (20) et que le dispositif (1) dispose en outre
d'une unité de fabrication (4) disposée en aval de l'unité de préparation (3), qui présente un équipement de lixiviation (29), dans lequel l'équipement de lixiviation (29) dispose d'un récipient (30) pour la fabrication d'une seconde suspension (28) à partir du raffinat (20) et du réactif (31), et qui présente un équipement de pyrolyse (27) pour la production du granulé d'engrais (2) à partir d'un produit intermédiaire (26) à base du raffinat (20), dans lequel l'équipement de pyrolyse (27) pour mettre en œuvre une pyrolyse est réalisé à l'abri de l'air et sans apport d'oxygène.

12. Dispositif (1) selon la revendication 11, **caractérisé en ce que** l'équipement de pyrolyse (27) est réalisé en tant qu'équipement de granulation sous la forme d'un appareil de fluidisation, en particulier en tant qu'appareil à couche fluidisée à haute température ou appareil à couche de rayonnement à haute température.

13. Dispositif (1) selon la revendication 11 ou 12, **caractérisé en ce que** l'unité de préparation (3) présente plusieurs récipients (5) pour la fabrication d'une suspension (6) et un ou plusieurs équipements de séparation (10) pour la séparation au moins partielle de l'extrait (19) de la suspension (6) correspondante, dans lequel le un équipement de séparation (10) est associé aux plusieurs récipients (5) ou un équipement de séparation (10) séparé à chaque récipient (5).

14. Dispositif (1) selon l'une quelconque des revendications 11 à 13, **caractérisé en ce que** l'unité de préparation (3) dispose d'un ou plusieurs équipements de régénération (22) pour l'extrait (19), dans lequel de manière avantageuse l'unité de préparation (3) présente un ou plusieurs équipements de recirculation (24) pour le solvant (9) régénéré.
